# EUROPEAN PATENT SPECIFICATION

(11) **EP 2 946 654 B1**
(45) Date of publication and mention of the grant of the patent: **01.04.2020**
(21) Application number: 13871476.1
(22) Date of filing: 11.11.2013
(51) Int. Cl.: A01G 7/04, A01G 22/00

(54) **METHOD FOR CULTIVATING FRUIT OR VEGETABLE**
VERFAHREN ZUR KULTIVIERUNG VON OBST ODER GEMÜSE
PROCÉDÉ POUR LA CULTURE DE FRUITS OU DE LÉGUMES

(30) Priority: 15.01.2013 JP 2013004784; 31.01.2013 JP 2013017627
(43) Date of publication of application: 25.11.2015
(73) Proprietor: Showa Denko K.K., Tokyo 105-8518 (JP)
(72) Inventor: ARA, Hironori, Tokyo 105-8518 (JP); SUZUKI, Hiroshi, Tokyo 105-8518 (JP); TAKEUCHI, Ryouichi, Tokyo 105-8518 (JP)
(74) Representative: Strehl Schübel-Hopf & Partner
(86) International application number: PCT/JP2013/080455
(87) International publication number: WO 2014/112189

(56) References cited:
- JP-A- H08 103 167
- JP-A- 2008 142 005
- JP-A- 2009 089 631
- JP-A- 2011 109 921
- JP-A- 2013 005 741
- US-A1- 2007 151 149

## Description

### TECHNICAL FIELD

The present invention relates to a method for cultivating a fruit vegetable.

### BACKGROUND ART

Conventionally, in plant cultivation, techniques are employed to urge raising seedling by irradiating artificial light on a plant seedling. By promoting growth of the plant, it is possible to reduce a cultivation period, and to increase the number of times harvesting may be made at the same location. In addition, even when the cultivation period is the same, a yield can be increased if the plant can be grown to become bigger.

For example, JP H08 103167 A proposes a light source that irradiates optical energy for culturing, growing, and plant tissue culturing, by arranging a mixture of light emitting diodes that irradiate blue light and light emitting diodes that irradiate red light on a single substrate (board) or a plurality of substrates, and simultaneously or alternately turning ON these light emitting diodes.

JP 2008 142005 A proposes the irradiation with red and blue light to control flower bud differentiation of a plant.

### DISCLOSURE OF THE INVENTION

### PROBLEM TO BE SOLVED BY THE INVENTION

However, even when the light source proposed in JP H08 103167 A is used to cultivate the fruit vegetable, for example, there is a problem in that it is difficult to harvest the fruit vegetable early.

Accordingly, one object of the present invention is to provide a method for cultivating a fruit vegetable, which can harvest the fruit vegetable early.

### MEANS OF SOLVING THE PROBLEM

According to one aspect not being part of the present invention, a method for cultivating a fruit vegetable is characterized in that there are provided a step that causes a flower bud differentiation by separately and independently carrying out a procedure to irradiate red light on a fruit vegetable sprout, and a procedure to irradiate blue light on the fruit vegetable sprout; and a step that irradiates light using a fluorescent lamp on the flower bud differentiated fruit vegetable.

According to another aspect not being part of the present invention, a method for cultivating a fruit vegetable is characterized in that there are provided a step that causes a flower bud differentiation by separately and independently carrying out a procedure to irradiate red light on a fruit vegetable sprout, and a procedure to irradiate blue light on the fruit vegetable sprout; and a step that simultaneously irradiates red light and blue light on the flower bud differentiated fruit vegetable.

According to the present invention, a method for cultivating a fruit vegetable according to claim 1 is disclosed.

The sunbeam may be irradiated on the flower bud differentiated fruit vegetable within a greenhouse. In addition, the method for cultivating fruit vegetable may further include a step that irradiates light using a fluorescent lamp on the flower bud differentiated fruit vegetable. The method for cultivating fruit vegetable may further include a step that simultaneously irradiates red light and blue light on the flower bud differentiated fruit vegetable.

### EFFECTS OF THE INVENTION

According to the disclosed method for cultivating a fruit vegetable, it is possible to harvest the fruit vegetable early.

### BRIEF DESCRIPTION OF THE DRAWINGS

FIG. 1 is a schematic diagram illustrating an example of a lamp used in an executed method;
FIG. 2 is a schematic diagram illustrating examples of an arrangement of red-light light emitting devices and blue-light light emitting devices in a lamp;
FIG. 3 is a block diagram illustrating an example of a lamp control system including lamp controllers; and
FIG. 4 is a schematic diagram for explaining an example of a cultivation of an *Arabidopsis thaliana* on a cultivating peat-ban.

### MODE OF CARRYING OUT THE INVENTION

A description will be given of embodiments of the present invention.

A method for cultivating a fruit vegetable may include a step that causes a flower bud differentiation by separately and independently carrying out a procedure to irradiate red light on a fruit vegetable sprout and a procedure to irradiate blue light on the fruit vegetable sprout, and a step that irradiates light using a fluorescent lamp on the flower bud differentiated fruit vegetable.

The fruit vegetable refers to a plant having edible seed or fruit, amongst the vegetables.

For example, the fruit vegetable includes tomatoes, melons, cucumbers, strawberries, pumpkins, water melons, egg plants, pimentos, gumbos, string beans, broad beans, peas, green soybeans, corn, and the like.

The cultivation period for the fruit vegetable in a monoculture is long, and there are demands to promote the growth of the fruit vegetable in a plant factory. The fruit vegetable must undergo two growth stages which are a vegetative stage (for example, increase in leaves) and a reproductive stage (for example, flower bud differentiation, flowering, and growth of fruit) before the fruit vegetable can be harvested, and thus, the growth stages are more complicated and so the cultivation period for the fruit vegetable in the monoculture is longer when compared to those of a leaf vegetable, such as lettuces or the like.

An executed method has the effect of promoting growth of the fruit vegetable after sprouting, until the flower bud differentiation occurs, but the effect of promoting the growth of the fruit vegetable deteriorates after the flower bud differentiation. For this reason, when cultivating the fruit vegetable, the growth is promoted by the executed method after the sprouting, until the flower bud differentiation occurs, and after the flower bud differentiation occurs, the growth is promoted by irradiating light using a fluorescent lamp, in order to efficiently grow the fruit vegetable before and after the flower bud differentiation.

The executed method refers to a plant cultivation method that separately and independently carries out a procedure (hereinafter also referred to as "a red light irradiating procedure") to irradiate red light on the plant sprout, and a procedure (hereinafter also referred to as "a blue light irradiating procedure") to irradiate blue light on the plant sprout, and is capable of promoting the plant growth.

Separately and independently carrying out the procedures means that the red light irradiating procedure and the blue light irradiating procedure exist separately, and that the red light irradiating procedure and the blue light irradiating procedure are carried out independently of each other.

In addition, each of the red light irradiating procedure and the blue light irradiating procedure may be carried out one or more times after the sprouting until the flower bud differentiation occurs.

A period in which the red light irradiating procedure and the blue light irradiating procedure are separately and independently carried out may include a period until the flower bud differentiation occurs, and may also include a part of a period after the flower bud differentiation.

The period in which the red light irradiating procedure and the blue light irradiating procedure are separately and independently carried out may be set arbitrary, as long as it is possible to efficiently grow the fruit vegetable before and after the flower bud differentiation, and a length of time of this period may be in units of hours (h), days (day), or minutes (min), as long as it is from 3 hours to 48 hours.

In this specification and the claims, a method of separately and independently carrying out the red light irradiating procedure and the blue light irradiating procedure does not include a method that irradiates the red light and the blue light by flashing at a frequency of 1 Hz or higher.

The red light irradiating procedure and the blue light irradiating procedure is carried out alternately, and a procedure to simultaneously irradiate the red light and the blue light on the plant sprout, or a procedure not to irradiate light on the plant sprout, may be provided between the two procedures.

The red light refers to light having a wavelength of 600 nm to 730 nm, and preferably has a center wavelength of 645 nm to 680 nm.

The blue light refers to light having a wavelength of 400 nm to 515 nm, and preferably has a center wavelength of 450 nm.

The red light may have a predetermined wavelength range with the center wavelength of 645 nm to 680 nm.

The blue light may have a predetermined wavelength range with the center wavelength of 450 nm.

In this example, the wavelength range is ±30 nm, preferably ±20 nm, and more preferably ±10 nm.

A PPFD (Photosynthetic Photon Flux Density) of each of the red light and the blue light is 1 µmolm⁻²s⁻¹ to 1000 µmolm⁻²s⁻¹, preferably 10 µmolm⁻²s⁻¹ to 500 µmolm⁻²s⁻¹, and more preferably 50 µmolm⁻²s⁻¹ to 250 µmolm⁻²s⁻¹.

A known light source may be used for light sources of the red light and the blue light, but an optical semiconductor device, such as a light emitting diode (LED: Light Emitting Diode), a laser diode (LD: Laser Diode), or the like is preferably used because the wavelength can be selected with ease, and it is possible to emit light having an optical energy that occupies a large proportion of an effective wavelength range. In a case in which an LED electroluminescence (EL: ElectroLuminescence) is used, the EL may be an organic EL or an inorganic EL.

In the red light irradiating procedure, the irradiation light irradiated on the fruit vegetable sprout includes the red light, and may further include light other than the red light, such as the blue light or the like, as long as a photosynthetic photon flux density ratio of the red light (or light emission intensity ratio of the red light) with respect to the irradiation light is 60% or higher. However, the light emission intensity ratio of the red light is preferably 100%. When the light emission intensity ratio of the red light in the red light irradiating procedure is lower than 60%, the effect of promoting the fruit vegetable growth until the flower bud differentiation occurs deteriorates.

In the red light irradiating procedure, a photosynthetic photon flux density ratio of the blue light (or light emission intensity ratio of the blue light) with respect to the irradiation light is 30% or lower, preferably 20% or lower, and more preferably 0%. When the light emission intensity ratio of the blue light in the red light irradiating procedure exceeds 30%, the effect of promoting the fruit vegetable growth until the flower bud differentiation occurs may deteriorate.

Light that includes red light, far-red light having a wavelength of 720 nm to 780 nm, and blue light having light emission intensity ratios of 60%, 20%, and 20%, respectively, may be used as the irradiation light in the red light irradiating procedure.

Similarly, in the blue light irradiating procedure, the irradiation light irradiated on the fruit vegetable sprout includes the blue light, and may further include light other than the blue light, such as the red light or the like, as long as the photosynthetic photon flux density ratio of the blue light (or light emission intensity ratio of the blue light) with respect to the irradiation light is 60% or higher. However, the light emission intensity ratio of the blue light is preferably 100%. When the light emission intensity ratio of the blue light in the blue light irradiating procedure is lower than 60%, the effect of promoting the fruit vegetable growth until the flower bud differentiation occurs deteriorates.

In the blue light irradiating procedure, the photosynthetic photon flux density ratio of the red light (or light emission intensity ratio of the red light) with respect to the irradiation light is 30% or lower, preferably 20% or lower, and more preferably 0%. When the light emission intensity ratio of the red light in the blue light irradiating procedure exceeds 30%, the effect of promoting the fruit vegetable growth until the flower bud differentiation occurs may deteriorate.

Light that includes blue light, far-red light having a wavelength of 720 nm to 780 nm, and red light having light emission intensity ratios of 60%, 20%, and 20%, respectively, may be used as the irradiation light in the blue light irradiating procedure.

Light is irradiated on the flower bud differentiated fruit vegetable using the fluorescent lamp, because the effect of promoting the growth can be increased by irradiating the light using fluorescent lamp, more than the effect of promoting the growth by the executed method.

The red light and the blue light may be irradiated simultaneously on the flower bud differentiated fruit vegetable, instead of irradiating the light using the fluorescent lamp. Further, by adding green light having a wavelength of 515 nm to 580 nm and the far-red light having a wavelength of 720 nm to 780 nm, it becomes possible to efficiently grow the fruit vegetable before and after the flower bud differentiation, similarly to the case in which the light is irradiated using the fluorescent lamp.

In this case, the light emission intensity ratio of the red light is 30% to 80%, preferably 40% to 60%, and more preferably 50%. In a case in which the light emission intensity ratio of the red light is lower than 30%, or exceeds 80%, the effect of promoting the growth of the flower bud differentiated fruit vegetable may deteriorate.

In addition, the light emission intensity ratio of the blue light is 10% to 60%, preferably 20% to 50%, and more preferably 30%. In a case in which the light emission intensity ratio of the blue light is lower than 10%, or exceeds 60%, the effect of promoting the growth of the flower bud differentiated fruit vegetable may deteriorate.

Light that includes red light, blue light, green light, and having light emission intensity ratios of 50%, 30%, 10%, and 10%, respectively, may be used as the irradiation light.

In addition, a sunbeam may be irradiated on the flower bud differentiated fruit vegetable, instead of irradiating the light using the fluorescent lamp. In this case, it becomes possible to efficiently grow the fruit vegetable before and after the flower bud differentiation, similarly to the case in which the light is irradiated using the fluorescent lamp. When the light is irradiated using the fluorescent lamp, the fruit vegetable may be cultivated within a sealed type cleanroom. For this reason, entry of insect pest can be suppressed, and organic cultivation can be performed. On the other hand, from the viewpoint of energy efficiency, it is preferable to irradiate the sunbeam. In this case, the sunbeam is preferably irradiated on the flower bud differentiated fruit vegetable within the sealed greenhouse that is capable of introducing the sunbeam. More over, at night when the sunbeam cannot be irradiated, it is preferable to irradiate the light on the flow bud differentiated fruit vegetable using the fluorescent lamp.

Light may be irradiated on the flower bud differentiated fruit vegetable using an LED light source emitting light of multiple of colors including red light and blue light, instead of irradiating the light using the fluorescent lamp.

The LED light source emitting the light of the multiple colors may simultaneously turn ON multiple kinds of LEDs capable of irradiating red light having a wavelength of 660 nm, blue light having a wavelength of 450 nm, green light having a wavelength of 525 nm, far-red light having a wavelength of 730 nm, violet light having a wavelength of 410 nm, or the like.

In addition, light may be irradiated on the flower bud differentiated fruit vegetable using a light source emitting light of multiple colors by a combination of the LEDs and the fluorescent lamp, instead of irradiating the light using the fluorescent lamp.

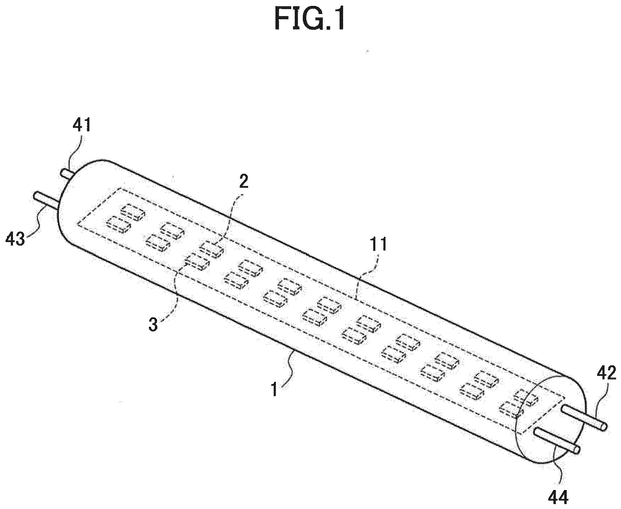

FIG. 1 is a schematic diagram illustrating an example of the lamp used in the executed method.

Red-light light emitting devices 2 and blue-light light emitting devices 3 are arranged one-dimensionally or two-dimensionally on a light irradiating part 11 that is provided in a lamp 1. The lamp 1 can irradiate red light from the light emitting devices 2 or blue light from the light emitting devices 3, by supplying power to electrodes 41 and 42, or electrodes 43 and 44, for example. In the example illustrated in FIG. 1, the light emitting devices 2 and 3 are provided in 2 rows of the light irradiating part 11, however, 3 or more rows may be provided.

A number ratio between the number of red-light light emitting devices 2 and the number of blue-light light emitting devices 3 is preferably in a range of 2:1 to 5:1. The number ratio is preferably in this range, because a growth rate of the fruit vegetable has a tendency to increase more when the light emission intensity of the red light is increased as compared to increasing the light emission intensity of the blue light.

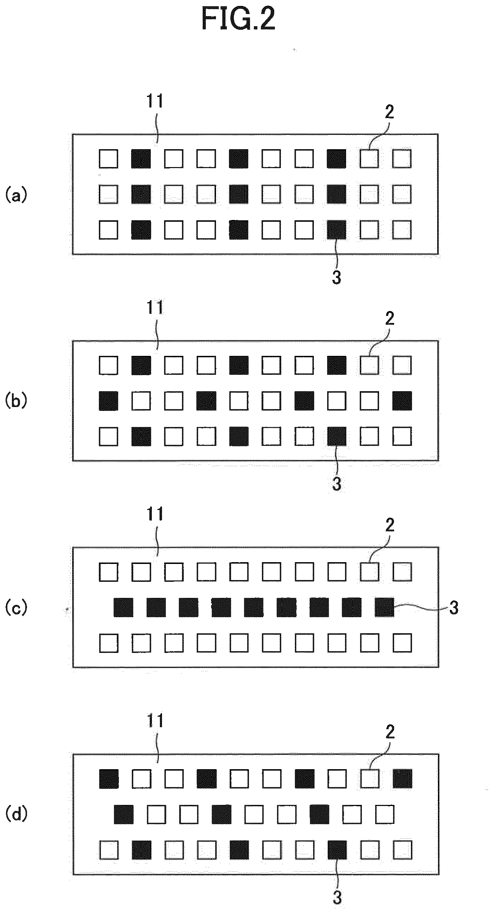

FIG. 2 illustrates by (a) to (d) examples of the arrangement of the red-light light emitting devices 2 and the blue-light light emitting devices 3 in the lamp 1. FIG. 2 illustrates by (a) to (d) the arrangements in which the light emitting devices 2 and 3 are provided in 3 rows of the light irradiating part 1. The red-light light emitting devices 2 are indicated by symbols □, and the blue-light light emitting devices 3 are indicated by symbols ■. FIG. 2 illustrates by (a) to (d) the examples in which the number ratio of the red-light light emitting devices 2 and the blue-light light emitting devices 3 is 2:1.

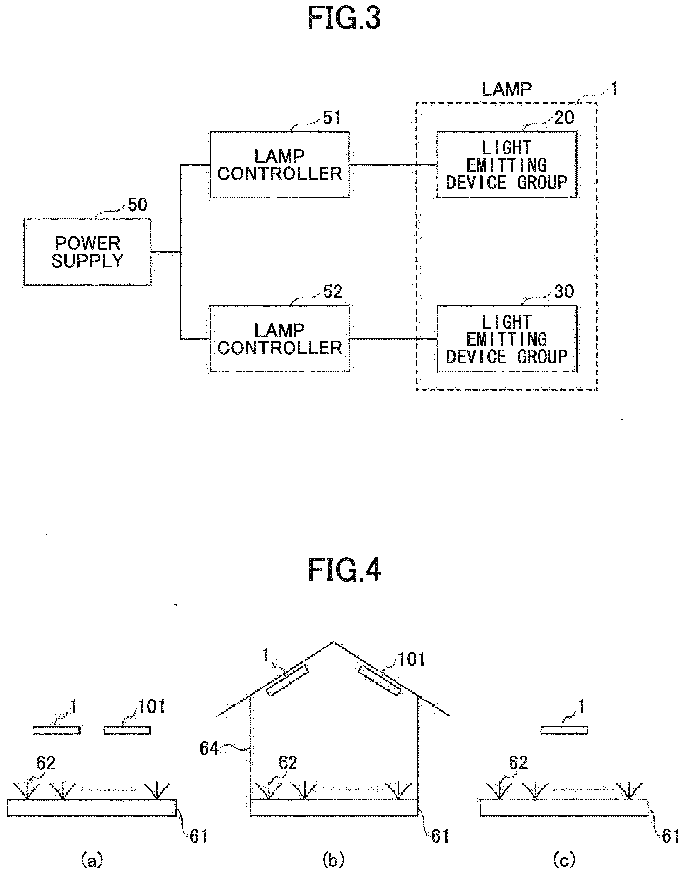

The lamp 1 is preferably provided with a lamp controller capable of independently adjusting the light emission intensity of the red light or the blue light. FIG. 3 is a block diagram illustrating an example of a lamp control system including lamp controllers. In FIG. 3, a power supply voltage from a power supply 50 is supplied to lamp controllers 51 and 52. The lamp controller 51 controls the light emission intensity of the plurality of red-light light emitting devices 2 forming a red-light light emitting device group 20 within the lamp 1. In addition, the lamp controller 52 controls the light emission intensity of the plurality of blue-light light emitting devices 3 forming a blue-light light emitting device group 30 within the lamp 1. The control of the red-light light emitting device group 20 by the lamp controller 51, and the control of the blue-light light emitting device group 30 by the lamp controller 52 may be carried out separately and independently. A single controller may separately and independently control the red-light light emitting device group 20 and the blue-light light emitting device group 30. In this case, the single controller may control ON and OFF states of a fluorescent lamp which will be described later.

Accordingly, the light emission intensity ratio of the red light and the blue light irradiated from the lamp 1 can be controlled to more suit the plant growth. For example, in FIG. 2, in a case in which the light emission intensities of the red-light light emitting devices 2 and the blue-light light emitting devices 3 are the same, the light emission intensity ratio of the red light and the blue light in the lamp 1 becomes 2:1. When the lamp controller is used to control the light emission intensity of the blue-light light emitting devices 3 to 1/2 that of the red-light light emitting devices 2, the light emission intensity ratio of the red light and the blue light in the lamp 1 becomes 4:1.

When the lamp 1 is used, the growth of the fruit vegetables until the flower bud differentiation occurs can be promoted by the executed method.

### Exemplary Implementations

6 seeds of *Arabidopsis thaliana* (variety: Columbia), which is an example of the fruit vegetable, were used as growth state observation targets, seeded at equal intervals on a cultivating peat-ban, and sprouted by irradiating light (12 hours day-length) using the fluorescent lamp. In this case, the sprouting took 3 days from the seeding the seeds. The sprout of the plant was placed within incubators having different light sources and grown for 49 days. In this case, the environments within the incubators are the same except for the light sources, the temperature was 25°C to 27°C, and the humidity was 50%RH.

### (Test Example 1)

In the case of a test example 1, a lamp including red LEDs HRP-350F (manufactured by SHOWA DENKO K.K.) having a center wavelength of 660 nm and blue LEDs GM2LR450G (manufactured by SHOWA DENKO K.K.) having a center wavelength of 450 nm packaged in a single light source, was used as the light source, and the sprout of the plant was grown for 49 days by the executed method. The number of red LEDs packaged within the lamp was 320, and the number of blue LEDs packaged within the lamp was 160. In addition, the photosynthetic photon flux density of the red LEDs was 200 µmolm⁻²s⁻¹, and the photosynthetic photon flux density of the blue LEDs was 100 µmolm⁻²s⁻¹. Further, each of the red light irradiating procedure and the blue light irradiating procedure was carried out in 12 hours, and these two procedures were alternately carried out in a continuous manner.

### (Test Example 2)

In the case of a test example 2, the sprout of the plant was grown in a manner similar to the test example 1, except for continuously irradiating the light using the fluorescent lamp as the light source. The photosynthetic photon flux density of the fluorescent lamp was 150 µmolm⁻²s⁻¹.

### (Test Example 3)

In the case of a test example 3, the sprout of the plant was grown in a manner similar to the test example 1, except for each of a procedure to simultaneously irradiate the red light and the blue light, and a procedure not to irradiate light, that were carried out in 12 hours, and that these two procedures were alternately carried out in a continuous manner.

A number of days to the flower bud differentiation, a length of a main flower stem, a number of seed pods, and a number of first leaves to appear were monitored for the plant of the test examples 1 through 3.

Table 1 illustrates the monitored results of the number of days to the flower bud differentiation, the length of the main flower stem, the number of seed pods, and the number of first leaves to appear.

**[Table 1]**

| | Number of days to flower bud differentiation [days] | Length of main flower stem [cm] | Number of seed pods [pods] | Number of first leaves to appear [leaves] |
|---|---|---|---|---|
| Test example 1 | 30 | 42 | 52 | 11 |
| Test example 2 | 37 | 18 | 10 | 30 |
| Test example 3 | 44 | 23 | 19 | 33 |

From Table 1, it was confirmed that the flower bud differentiation is promoted, and the length of the main flower stem and the number of seed pods increase considerably, while the number of first leaves to appear decreases for the plant according to the executed method.

FIG. 4 is a schematic diagram for explaining an example of a cultivation of the plant on the cultivating peat-ban. FIG. 4 schematically illustrates a positional relationship of the lamp 1, or the lamp 1 and a fluorescent lamp 101, and an *Arabidopsis thaliana* 62 cultivated on a cultivating peat-ban 61. An arrangement of the lamp 1, or the lamp 1 and the fluorescent lamp 101, is not limited to a particular arrangement as long as light can be irradiated on the *Arabidopsis thaliana* 62 that is cultivated.

### (Exemplary Implementation 1)

In the case of an exemplary implementation 1, the plant was cultivated in a manner similar to the test example 1, except that after the flower bud differentiation (after 30 days in this example), the executed method is stopped, and the fluorescent lamp is used as the light source to irradiate the light on the flower bud differentiated plant for 10 days. The photosynthetic photon flux density of the fluorescent lamp was 150 µmolm⁻²s⁻¹. FIG. 4 illustrates by (a) an example in which the *Arabidopsis thaliana* 62 is cultivated on the cultivating peat-ban 61 using the lamp 1 and the fluorescent lamp 101 in the exemplary implementation 1.

### (Exemplary Implementation 2)

In the case of an exemplary implementation 2, the plant was cultivated in a manner similar to the test example 1, except that after the flower bud differentiation (after 30 days in this example), the executed method is stopped, the flower bud differentiated plant is moved into a greenhouse, and cultivated for 10 days. In this case, a sunbeam was irradiated on the flower bud differentiated plant in the daytime, and light was irradiated on the flower bud differentiated plant using the fluorescent lamp after sunset (from 7 pm to 5 am the next morning). The photosynthetic photon flux density of the fluorescent lamp was 150 µmolm⁻²s⁻¹. FIG. 4 illustrates by (b) an example in which the *Arabidopsis thaliana* 62 is cultivated on the cultivating peat-ban 61 inside a greenhouse 64 using the lamp 1 and the fluorescent lamp 101 in the exemplary implementation 2.

### (Exemplary Implementation 3)

In the case of an exemplary implementation 3, the plant was cultivated in a manner similar to the test example 1, except that after the flower bud differentiation (after 30 days in this example), the executed method is stopped, and red light and blue light are simultaneously irradiated on the flower bud differentiated plant for 10 days. The photosynthetic photon flux density of each of the red LED and the blue LED was 75 µmolm⁻²s⁻¹. FIG. 4 illustrates by (c) an example in which the *Arabidopsis thaliana* 62 is cultivated on the cultivating peat-ban 61 using the lamp 1 in the exemplary implementation 3.

In the exemplary implementation 2 described above, the arrangement illustrated in FIG. 4 by (c) or (a) may be used until the flower bud differentiation, and the arrangement illustrated in FIG. 4 by (b) may be used after the executed method is stopped in order to utilize the irradiation of the sunbeam and the irradiation of the fluorescent lamp 101. In this case, the lamp 1 within the greenhouse 64 may be omitted.

Moreover, in the exemplary implementation 2 described above, the arrangement illustrated in FIG. 4 by (a) may be used until the flower bud differentiation, the arrangement illustrated in FIG. 4 by (b) may be used after the executed method is stopped in order to utilize the irradiation of the sunbeam, and the arrangement illustrated in FIG. 4 by (a) may be used in order to utilize the irradiation of the fluorescent lamp 101. In this case, the lamp 1 and the fluorescent lamp 101 within the greenhouse 64 may be omitted.

Furthermore, in the case of the modification of the exemplary implementation 2 described above, the arrangement illustrated in FIG. 4 by (c) or (a) may be used until the flower bud differentiation, the arrangement illustrated in FIG. 4 by (b) may be used after the executed method is stopped in order to utilize the irradiation of the sunbeam, and the arrangement illustrated in FIG. 4 by (b) may be used in order to utilize the simultaneous irradiation of the red light and the blue light by the lamp 1 in place of the irradiation of the fluorescent lamp 101. In this case, the fluorescent lamp 101 within the greenhouse 64 may be omitted.

### (Comparison Example 1)

In the case of a comparison example 1, the plant was cultivated in a manner similar to the test example 2, except that the cultivation period was changed to 40 days.

### (Comparison Example 2)

In the case of a comparison example 2, the plant was cultivated in a manner similar to the test example 3, except that the cultivation period was changed to 40 days.

A fresh weight of an above-ground part of the plant was obtained for the exemplary implementations 1 through 3 and the comparison examples 1 and 2.

Table 2 illustrates the obtained results of the fresh weight of the above-ground part of the plant for the exemplary implementations 1 through 3 and the comparison examples 1 and 2.

**Table 2**

| | Fresh weight of above-ground part [g] |
|---|---|
| Exemplary implementation 1 | 2.5 |
| Exemplary implementation 2 | 2.3 |
| Exemplary implementation 3 | 2.4 |
| Comparison example 1 | 1.5 |
| Comparison example 2 | 1.2 |

From Table 2, it was confirmed that the plant of the exemplary implementations 1 through 3 can efficiently grow before and after the flower bud differentiation, and that early harvesting of the plant is possible, when compared to the plant of the comparison examples 1 and 2.

The disclosed method for cultivating the fruit vegetable is described above by way of embodiments, exemplary implementations, and modifications. However, the the present invention is not limited to these embodiments, exemplary implementations, and modifications, and various variations and modifications may be made within the scope of the present invention as defined by the appended claims.

### DESCRIPTION OF REFERENCE NUMERALS

- 1: Lamp
- 2: Red-Light Light Emitting Device
- 3: Blue-Light Light Emitting Device
- 11: Light Irradiating Part
- 20, 30: Light Emitting Device Group
- 41, 42, 43, 44: Electrode
- 50: Power Supply
- 51, 52: Lamp Controller
- 61: Cultivating Peat-Ban
- 62: *Arabidopsis thaliana*
- 64: Greenhouse
- 101: Fluorescent Lamp

## Claims

1. A method for cultivating a fruit vegetable, comprising:
a step that causes a flower bud differentiation by separately and independently carrying out a procedure to continuously irradiate red light on a fruit vegetable sprout, and a procedure to continuously irradiate blue light on the fruit vegetable sprout; and
a step that irradiates a sunbeam on the flower bud differentiated fruit vegetable,
wherein the procedure to continuously irradiate the red light and the procedure to continuously irradiate the blue light are alternately carried out, each for a length of time from three hours to forty-eight hours.

2. The method for cultivating the fruit vegetable as claimed in claim 1, **characterized in that** the sunbeam is irradiated on the flower bud differentiated fruit vegetable within a greenhouse.

3. The method for cultivating the fruit vegetable as claimed in claim 1 or 2, **characterized in that** there is further provided:
a step that irradiates light emitted from a fluorescent lamp on the flower bud differentiated fruit vegetable.

4. The method for cultivating the fruit vegetable as claimed in claim 1 or 2, **characterized in that** there is further provided:
a step that simultaneously irradiates red light and blue light on the flower bud differentiated fruit vegetable.

## Patentansprüche

1. Verfahren zum Anbau eines Fruchtgemüses, welches umfasst:
einen Schritt, der eine Blütenknospendifferenzierung bewirkt, indem getrennt und unabhängig voneinander ein Verfahren zur kontinuierlichen Bestrahlung eines Fruchtgemüsesprösslings mit rotem Licht und ein Verfahren zur kontinuierlichen Bestrahlung des Fruchtgemüsesprösslings mit blauem Licht durchgeführt wird; und
einen Schritt, bei dem das blütenknospendifferenzierte Fruchtgemüse mit Sonnenstrahlen bestrahlt wird,
wobei das Verfahren zum kontinuierlichen Bestrahlen mit rotem Licht und das Verfahren zum kontinuierlichen Bestrahlen mit blauem Licht jeweils für eine Zeitdauer von drei Stunden bis achtundvierzig Stunden abwechselnd durchgeführt werden.

2. Verfahren zum Anbau des Fruchtgemüses nach Anspruch 1, **dadurch gekennzeichnet, dass** die Sonnenstrahlen auf das blütenknospendifferenzierte Fruchtgemüse innerhalb eines Gewächshauses gestrahlt werden.

3. Verfahren zum Anbau des Fruchtgemüses nach Anspruch 1 oder 2, **dadurch gekennzeichnet, dass** es weitergehend vorgesehen ist:
ein Schritt, bei dem von einer fluoreszierenden Lampe emittiertes Licht auf das blütenknospendifferenzierte Fruchtgemüse gestrahlt wird.

4. Verfahren zum Anbau des Fruchtgemüses nach Anspruch 1 oder 2, **dadurch gekennzeichnet, dass** weiter vorgesehen ist:
ein Schritt, bei dem gleichzeitig rotes und blaues Licht auf das blütenknospendifferenzierte Fruchtgemüse gestrahlt wird.

## Revendications

1. Procédé de culture de légumes-fruits, comprenant :
une étape qui permet une différenciation des bourgeons floraux en effectuant séparément et indépendamment une procédure d'irradiation en continu d'une lumière rouge sur un germe de légume-fruit, et une procédure d'irradiation en continu d'une lumière bleue sur le germe de légume-fruit ; et
une étape qui irradie un rayon de soleil sur le bourgeon de fleur différencié du légume-fruit,
dans lequel la procédure d'irradiation en continu de la lumière rouge et la procédure d'irradiation en continu de la lumière bleue sont effectuées en alternance, chacune pendant une durée de trois heures à quarante-huit heures.

2. Procédé de culture du légumes-fruits selon la revendication 1, **caractérisé en ce que** le rayon de soleil est irradié sur le bourgeon de fleur différencié de légume-fruit dans une serre.

3. Procédé de culture du légumes-fruits selon la revendication 1 ou 2, **caractérisé en ce qu'**il est en outre prévu :
une étape d'irradiation de lumière émise par une lampe à fluorescence sur le bourgeon de fleur différencié de légume-fruit.

4. Procédé de culture du légumes-fruits selon la revendication 1 ou 2, **caractérisé en ce qu'**il est en outre prévu :
une étape qui irradie simultanément de la lumière rouge et de la lumière bleue sur le sur le bourgeon de fleur différencié de légume-fruit.
